# EUROPEAN PATENT APPLICATION

(11) **EP 4 835 031 A1**
(43) Date of publication of application: **04.11.2026**
(21) Application number: 24912326.6
(22) Date of filing: 09.12.2024
(51) Int. Cl.: C09J 123/26, B32B 27/00, C09J 7/35, C09J 11/08

(54) **ADHESIVE COMPOSITION, ADHESIVE LAYER, DECORATIVE FILM, AND DECORATIVE MOLDED BODY**

(30) Priority: 27.12.2023 JP 2023220840
(71) Applicant: TOYOBO MC Corporation, Osaka-shi, Osaka 530-0001 (JP)
(72) Inventor: FUJI, Shoki, Takasago-shi, Hyogo 676-0082 (JP); YAMASHITA, Yoji, Takasago-shi, Hyogo 676-0082 (JP)
(74) Representative: Vossius & Partner Patentanwälte Rechtsanwälte mbB
(86) International application number: PCT/JP2024/043471
(87) International publication number: WO 2025/142437

(57) **Abstract**

The present invention provides an adhesive composition having good storage stability, exhibiting good adhesive strength in an unstretched state, and capable of maintaining good adhesive strength even after stretching. Specifically, the present invention provides an adhesive composition including an acid-modified polyolefin (A), a thermoplastic elastomer (B), and a tackifying resin (C), the composition satisfying all of the following conditions (1) to (4):
(1) the acid-modified polyolefin (A) having a melting point of 50°C to 120°C;
(2) the content of the tackifying resin (C) being 100 to 600 parts by mass per 100 parts by mass of the acid-modified polyolefin (A);
(3) the content of the thermoplastic elastomer (B) being 100 to 600 parts by mass per 100 parts by mass of the acid-modified polyolefin (A); and
(4) the thermoplastic elastomer (B) comprising a styrene-based elastomer.

## Description

### Technical Field

The present invention relates to an adhesive composition, an adhesive layer, a decorative film, and a decorative molded article.

### Background Art

Conventionally, polyolefins, such as polypropylene and polyethylene, are inexpensive and have excellent properties, such as moldability, chemical resistance, water resistance, and electrical characteristics. Therefore, polyolefins are used as a substrate for sheets, films, molded articles, or the like in fields such as automobile parts.

Polyolefin substrates are often coated on their surfaces, for example, to enhance aesthetic appeal and provide protection. In painting, an adhesive is usually used to improve the adhesion between a topcoat film and a polyolefin substrate. However, unlike polar substrates such as polyurethane resins, polyamide resins, acrylic resins, and polyester resins, polyolefin substrates are non-polar and crystalline; therefore, it is difficult to apply coatings or adhesives to polyolefin substrates. Accordingly, polyolefin-based adhesives, which exhibit good adhesion due to having the same main chain backbone, have been used as adhesives.

In recent years, with the weight reduction of automobiles, the use of polyolefin substrates has been increasing in automotive exterior applications such as bumpers, automotive outer panels, fenders, and radiator grills. In addition, substrates of types different from polyolefin substrates, such as polycarbonate, ABS resin, polyvinyl chloride, acrylic resin, urethane resin, and metals, are used for parts such as gasoline tanks, door handles, engine covers, and side mirrors.

Such various substrates are coated on their surfaces. Accordingly, from the standpoint of improving the efficiency of coating processes, there has been an increasing demand for an adhesive that can adhere well to both a polyolefin substrate and substrates of types different from a polyolefin substrate, and that has sufficient storage stability so that it does not undergo thickening or gelation during the processing or storage.

Further, from the perspective of reducing VOC and CO₂, replacing conventional spray painting with film decoration is being considered. Among such methods, laminating a decorative film onto the outermost surface of a molded article to form a decorative molded article offers advantages in terms of higher design flexibility and superior productivity compared to conventional spray painting, because it allows for the decoration of the surfaces of molded articles with three-dimensional irregularities. Furthermore, as one of the means for film decoration, vacuum pressure forming, which comprises bonding a decorative film to a three-dimensional part using an adhesive material, is attracting attention.

For example, Patent Literature (PTL) 1 describes "a decorative film comprising a decorative layer and an adhesive layer, wherein the adhesive layer comprises a block copolymer comprising a block having an isopentane-derived structure, a terpene-based resin, and a coloring pigment, the decorative film being for decorative molding under vacuum heating conditions or under reduced-pressure heating conditions." Further, PTL 1 describes that "the method for producing a decorative film preferably comprises applying an adhesive composition to a decorative layer, and then drying or curing the composition to form an adhesive layer."

### Citation List

### Patent Literature

PTL 1: JP2022-39431A

### Summary of Invention

### Technical Problem

In order to produce a decorative film using the adhesive composition described in PTL 1 and laminate the decorative film onto a molded article to produce a decorative molded article, it is necessary to bond the decorative film and the molded article together at a high temperature of 140°C.

However, when the adhesive composition is heated at a high temperature of 140°C or more, drawdown may occur, resulting in a problem in terms of poor adhesive strength.

The present invention was made in view of the above problem. An object of the present invention is to provide an adhesive composition having good storage stability, exhibiting good adhesive strength in an unstretched state, and capable of maintaining good adhesive strength even after stretching.

### Solution to Problem

As a result of extensive research to achieve the above object, the present inventors found that an adhesive composition containing an acid-modified polyolefin (A), a thermoplastic elastomer (B), and a tackifying resin (C) in predetermined proportions can achieve the above object. The present inventors conducted further research based on this finding, and have accomplished the present invention.

The present invention includes, for example, the subject matter described in the following item.
Item 1. An adhesive composition comprising:
an acid-modified polyolefin (A);
a thermoplastic elastomer (B); and
a tackifying resin (C),
wherein the composition satisfies all of the following (1) to (4) :
   (1) the acid-modified polyolefin (A) has a melting point of 50 to 120°C;
   (2) the content of the tackifying resin (C) is 100 to 600 parts by mass per 100 parts by mass of the acid-modified polyolefin (A);
   (3) the content of the thermoplastic elastomer (B) is 100 to 600 parts by mass per 100 parts by mass of the acid-modified polyolefin (A); and
   (4) the thermoplastic elastomer (B) comprises a styrene-based elastomer.

### Advantageous Effects of Invention

The adhesive composition of the present invention has good storage stability, exhibits good adhesive strength in an unstretched state, and is capable of maintaining good adhesive strength even after stretching.

### Description of Embodiments

Preferred embodiments of the present invention are described below in detail. The constituent elements may be described below with reference to representative embodiments and specific examples. However, the present invention is not limited to such embodiments.

In the present specification, the terms "comprising" and "containing" include the concepts of comprising, containing, consisting essentially of, and consisting of.

In the numerical ranges described in stages in the present specification, the upper- or lower-limit value of a numerical range of a certain stage can be freely combined with the lower- or upper-limit value of a numerical range of another stage. In any numerical range described in the present specification, the upper- or lower-limit value of the numerical range may be replaced with a value shown in the Examples or a value that can be unambiguously derived from the Examples. Furthermore, in the present specification, a numerical value connected with "to" means a numerical range including the numerical values before and after "to" as the lower- and upper-limit values.

In the present specification, "A and/or B" means "either A or B" or "both A and B." Specifically, it means "A," "B," or "A and B."

In the present specification, room temperature refers to a temperature within the range of 20°C to 25°C.

In the present specification, the phrase "over a wide range of temperatures, from low to high temperatures" typically refers to a temperature range of 40°C or more and 120°C or less, and preferably a temperature range of 50°C or more and 100°C or less.

### 1. Adhesive Composition

The adhesive composition of the present embodiment comprises the following features (I) to (V):
(I) the adhesive composition comprises an acid-modified polyolefin (A), a thermoplastic elastomer (B), and a tackifying resin (C);
(II) the acid-modified polyolefin (A) has a melting point of 50 to 120°C;
(III) the content of the tackifying resin (C) is 100 to 600 parts by mass per 100 parts by mass of the acid-modified polyolefin (A);
(IV) the content of the thermoplastic elastomer (B) is 100 to 600 parts by mass per 100 parts by mass of the acid-modified polyolefin (A); and
(V) the thermoplastic elastomer (B) comprises a styrene-based elastomer.

The adhesive composition of the present embodiment, which has the above features (I) to (V), exhibits high adhesive strength in the unstretched state and also shows sufficient adhesive strength even after stretching, and has excellent storage stability.

### Acid-Modified Polyolefin (A)

The adhesive composition of the present invention contains an acid-modified polyolefin (A) as an essential component. In one embodiment, the acid-modified polyolefin (A) is preferably a polymer obtained by graft polymerization of at least one of an α,β-unsaturated carboxylic acid or an acid anhydride thereof onto a polyolefin. In other words, in one embodiment, the acid-modified polyolefin (A) is preferably a graft polymer having a structure in which at least one member selected from α,β-unsaturated carboxylic acid and acid anhydride thereof is grafted onto a polyolefin.

The polyolefin is preferably a propylene-based resin containing propylene as a constituent component. The polyolefin is more preferably homopolypropylene (a propylene homopolymer) and/or a propylene-α-olefin copolymer, and is even more preferably a propylene-α-olefin copolymer.

In one embodiment, the acid-modified polyolefin (A) is more preferably a graft polymer having a structure in which an α,β-unsaturated carboxylic or an acid anhydride thereof is grafted onto a homopolypropylene or a propylene-α-olefin copolymer.

In one embodiment, it is even more preferable that the acid-modified polyolefin (A) is a graft polymer having a structure in which an α,β-unsaturated carboxylic or an acid anhydride thereof is grafted onto a propylene-α-olefin copolymer.

The propylene-α-olefin copolymer mainly comprises propylene and is formed by copolymerizing propylene with α-olefin. Examples of α-olefins include ethylene, 1-butene, isobutene, 1-pentene, 1-hexene, 1-heptene, 1-octene, 4-methyl-1-pentene, 1-decene, 1-dodecene, 1-tetradecene, 1-hexadecene, 1-octadecene, 1-eicosene, and vinyl acetate. These α-olefins can be used singly or in a combination of two or more. In one embodiment, among these α-olefins, ethylene and 1-butene are preferred, and 1-butene is more preferred.

In one embodiment, the content of the propylene component in the propylene-α-olefin copolymer is preferably 50 mol% or more, more preferably 60 mol% or more, even more preferably 65 mol% or more, and particularly preferably 70 mol% or more. When the propylene component content of the propylene-α-olefin copolymer is 50 mol% or more, the adhesive strength of the adhesive composition to the polyolefin substrate (in particular, polypropylene substrate) is further improved.

Examples of the α,β-unsaturated carboxylic acid or acid anhydride thereof to be graft-polymerized onto the polyolefin include maleic acid, maleic anhydride, fumaric acid, itaconic acid, itaconic anhydride, citraconic acid, citraconic anhydride, mesaconic acid, aconitic acid, and aconitic anhydride. Among these, acid anhydrides of α,β-unsaturated carboxylic acids are preferred, and maleic anhydride is more preferred.

In one embodiment, the acid-modified polyolefin (A) is preferably at least one selected from the group consisting of maleic anhydride-modified polypropylene, maleic anhydride-modified propylene-ethylene copolymer, and maleic anhydride-modified propylene-1-butene copolymer. In one embodiment, the acid-modified polyolefin (A) is more preferably a maleic anhydride-modified propylene-ethylene copolymer and/or a maleic anhydride-modified propylene-1-butene copolymer. In one embodiment, the acid-modified polyolefin (A) is more preferably a maleic anhydride-modified propylene-1-butene copolymer.

As a method for graft polymerizing an α,β-unsaturated carboxylic acid or an acid anhydride thereof onto a polyolefin, a wide range of known methods can be used. Examples of such methods include radical grafting reactions (a reaction in which radical species are generated for a polyolefin serving as the main chain in the presence of a radical generator, and an α,β-unsaturated carboxylic acid or an acid anhydride thereof is graft-polymerized using the radical species as a polymerization initiation point).

Preferred radical generators are organic peroxides. Examples of organic peroxides include compounds such as di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide.

The melting point (Tm) of the acid-modified polyolefin (A) is 50°C or higher and 120°C or lower. In one embodiment, the melting point of the acid-modified polyolefin (A) is preferably 55°C or higher, more preferably 60°C or higher, even more preferably 65°C or higher, and particularly preferably 70°C or higher. The melting point of the acid-modified polyolefin (A) is preferably 110°C or lower, more preferably 100°C or lower, even more preferably 90°C or lower, and particularly preferably 85°C or lower. When the melting point of the acid-modified polyolefin (A) is less than 50°C, the cohesive force derived from the crystals of the acid-modified polyolefin (A) becomes weak, and the adhesive composition exhibits poor adhesive strength both in the unstretched state and after stretching. When the melting point of the acid-modified polyolefin (A) exceeds 120°C, the storage stability of the adhesive composition is significantly reduced, and the adhesive composition exhibits poor adhesive strength both in the unstretched state and after stretching.

In one embodiment, the acid-modified polyolefin (A) preferably has a melting point (TM) of 55°C or higher and 110°C or lower, more preferably 60°C or higher and 100°C or lower, still more preferably 65°C or higher and 90°C or lower, and particularly preferably 70°C or higher and 85°C or lower.

The melting point (Tm) of the acid-modified polyolefin (A) can be measured with a differential scanning calorimeter (DSC) in accordance with JIS K7121-2012. Specifically, using a DSC measuring device, about 5 mg of a sample is heated and maintained in a molten state at 150°C for 10 minutes, then cooled at a rate of 10°C/min and maintained stable at -50°C, and further heated to 150°C at a rate of 10°C/min to measure the peak temperature upon melting. The melting peak temperature is evaluated as the melting point. The specific measurement method is explained in the Examples described below.

In one embodiment, the acid-modified polyolefin (A) preferably has an acid value of 2 to 50 mg KOH/g, more preferably 3 to 40 mg KOH/g, even more preferably 4 to 30 mg KOH/g, still even more preferably 5 to 25 mg KOH/g, and particularly preferably 6 to 16 mg KOH/g. When the acid-modified polyolefin (A) has an acid value of 2 mg KOH/g or more, the adhesive composition tends to exhibit better adhesion. On the other hand, when the acid value is 50 mg KOH/g or less, the compatibility between the acid-modified polyolefin (A) and the thermoplastic elastomer (B) tends to be better.

The acid value of the acid-modified polyolefin (A) can be adjusted by the amounts of the α,β-unsaturated carboxylic acid, α,β-unsaturated carboxylic acid anhydride, and radical generator used. The acid value of the acid-modified polyolefin (A) can be measured, for example, according to the test method of JIS K0070-1992. The specific measurement method is explained in the Examples described below.

In one embodiment, the acid-modified polyolefin (A) preferably has a weight average molecular weight (Mw) in the range of 10,000 to 200,000. The weight average molecular is more preferably in the range of 30,000 to 160,000, even more preferably in the range of 40,000 to 140,000, and most preferably in the range of 50,000 to 100,000. When the acid-modified polyolefin (A) has an Mw of 10,000 or more, the acid-modified polyolefin (A) exhibits cohesion, and the adhesive composition tends to exhibit better adhesion. When the acid-modified polyolefin (A) has an Mw of 200,000 or less, the adhesive composition tends to have improved storage stability and fluidity and exhibits better adhesion, and the adhesive strength after stretching tends to be excellent.

The Mw of the acid-modified polyolefin (A) can be measured by gel permeation chromatography (GPC) and converted from a polystyrene calibration curve. The GPC measurement is performed by a conventionally known method using a solvent such as THF and a commercially available apparatus. The specific measurement method is explained in the Examples described below.

In one embodiment, the melt viscosity of the acid-modified polyolefin (A) at 230°C is preferably 1000 mPa·s or more and 10000 mPa·s or less, more preferably 1200 mPa·s or more and 8500 mPa·s or less, still more preferably 1300 mPa·s or more and 7500 mPa·s or less, particularly preferably 1400 mPa or more and 6000 mPa·s or less, and most preferably 1500 mPa·s or more and 5000 mPa·s or less. When the melt viscosity of the acid-modified polyolefin (A) at 230°C is 1000 mPa·s or more and 10000 mPa·s or less, the adhesive composition tends to have further improved storage stability and exhibits better adhesion, and the adhesive strength after stretching tends to be better.

In one embodiment, from the viewpoint of further improving the adhesion between the polyolefin substrate and the adhesive composition, the content ratio of the acid-modified polyolefin (A) to the total mass of the acid-modified polyolefin (A), the thermoplastic elastomer (B), and the tackifying resin (C) is preferably 5 mass% or more and 30 mass% or less, more preferably 8 mass% or more and 25 mass% or less, still more preferably 9 mass% or more and 20 mass% or less, and even more preferably 9.5 mass% or more and 17.5 mass% or less.

### Thermoplastic Elastomer (B)

The adhesive composition of the present invention contains a thermoplastic elastomer (B) as an essential component. The thermoplastic elastomer (B) comprises a styrene-based elastomer. When the thermoplastic elastomer (B) contains a styrene-based elastomer, internal stress in the adhesive composition can be reduced, and adhesion between the adhesive composition and the substrate film can be improved. Further, since the thermoplastic elastomer (B) contains a styrene-based elastomer, the compatibility between the acid-modified polyolefin (A) and the thermoplastic elastomer (B) becomes good, and the adhesive composition has good storage stability.

Examples of the styrene-based elastomer include a styrene homopolymer, a styrene-butadiene block copolymer, a styrene-butadiene-styrene block copolymer, a styrene-ethylene-propylene block copolymer, a styrene-isoprene-butadiene-styrene block copolymer, and a styrene-isoprene-styrene block copolymer. The styrene-based elastomer may be hydrogenated. Examples of hydrogenated styrene-based elastomers include a styrene-ethylene-butylene-styrene block copolymer and a styrene-ethylene-propylene-styrene block copolymer. The styrene-based elastomer may also be an acid-modified product.

In one embodiment, the styrene-based elastomer is preferably at least one selected from the group consisting of a styrene homopolymer, a styrene-butadiene block copolymer, a styrene-butadiene-styrene block copolymer, a styrene-ethylene-propylene block copolymer, a styrene-isoprene-butadiene-styrene block copolymer, a styrene-isoprene-styrene block copolymer, a styrene-ethylene-butylene-styrene block copolymer, and a styrene-ethylene-propylene-styrene block copolymer.

In one embodiment, the styrene-based elastomer is more preferably at least one selected from the group consisting of a styrene-butadiene-styrene block copolymer, a styrene-ethylene-propylene-styrene block copolymer, and a styrene-isoprene-butadiene-styrene block copolymer.

In one embodiment, the styrene-based elastomer is particularly preferably a styrene-butadiene-styrene block copolymer and/or a styrene-ethylene-propylene-styrene block copolymer.

In one embodiment, the thermoplastic elastomer (B) may further contain, in addition to the styrene-based elastomer, at least one selected from the group consisting of olefin-based elastomers, alkene-based elastomers, vinyl chloride-based elastomers, urethane-based elastomers, and amide-based elastomers, as long as the effects of the present application are not impaired.

In one embodiment, from the viewpoint of the stress relaxation of the thermoplastic elastomer (B), the content ratio of the olefin-based elastomer to the total mass of the adhesive composition is preferably 10 mass% or less, more preferably 8 mass% or less, even more preferably 5 mass% or less, still even more preferably 2.5 mass% or less, and particularly preferably 1 mass% or less.

Examples of olefin-based elastomers include an ethylene-propylene copolymer, an ethylene-butene copolymer, an ethylene-vinyl acetate copolymer, and an ethylene-ethyl acrylate copolymer.

In one embodiment, the content ratio of the ethylene-butene copolymer to the total mass of the adhesive composition is preferably 10 mass% or less, more preferably 8 mass% or less, even more preferably 5 mass% or less, still even more preferably 2.5 mass% or less, and particularly preferably 1 mass% or less.

In the present invention, the content of the thermoplastic elastomer (B) is 100 to 600 parts by mass per 100 parts by mass of the acid-modified polyolefin (A). When the content of the thermoplastic elastomer (B) is less than 100 parts by mass per 100 parts by mass of the acid-modified polyolefin (A), the adhesive composition exhibits poor adhesive strength in the unstretched state and after stretching. When the content of the thermoplastic elastomer (B) exceeds 600 parts by mass per 100 parts by mass of the acid-modified polyolefin (A), the storage stability of the adhesive composition is significantly reduced, and the adhesive composition exhibits poor adhesive strength in the unstretched state and after stretching.

In one embodiment, the content of the thermoplastic elastomer (B) is, per 100 parts by mass of the acid-modified polyolefin (A), preferably more than 100 parts by mass and less than 600 parts by mass, more preferably 150 parts by mass or more and 550 parts by mass or less, still more preferably 200 parts by mass or more and 500 parts by mass or less, even more preferably 250 parts by mass or more and 450 parts by mass or less, and most preferably 300 parts by mass or more and 430 parts by mass or less.

In one embodiment, the styrene content in the thermoplastic elastomer (B) is preferably 5 mass% or more and 35 mass% or less, more preferably 7 mass% or more and 30 mass% or less, still more preferably 9 mass% or more and 25 mass% or less, and most preferably 11 mass% or more and 15 mass% or less. When the styrene content in the thermoplastic elastomer (B) is 5 mass% or more and 35 mass% or less, the compatibility between the thermoplastic elastomer (B) and the acid-modified polyolefin (A) is further improved, the stress of the thermoplastic elastomer (B) is further relaxed, and the adhesive composition exhibits further improved adhesive strength after stretching. Further, the adhesive composition exhibits good adhesion over a wide temperature range from low to high temperatures, and the adhesion between a polyolefin substrate and a substrate different from the polyolefin substrate is further improved.

The styrene content in the thermoplastic elastomer (B) can be measured by using ¹H-NMR or ¹³C-NMR. The "styrene content" refers to a content ratio (mass%) of the aromatic vinyl polymer block, represented by styrene, based on the mass of the thermoplastic elastomer (B).

In one embodiment, the thermoplastic elastomer (B) preferably has a density of 0.88 to 0.99 g/cm³, and more preferably 0.89 to 0.91 g/cm³. When the density of the thermoplastic elastomer (B) is 0.88 to 0.99 g/cm³, the difference in specific gravity between the thermoplastic elastomer (B) and the acid-modified polyolefin (A) does not become excessively large, and the storage stability of the adhesive composition tends to be better.

In one embodiment, the content ratio of the thermoplastic elastomer (B) to the total mass of the acid-modified polyolefin (A), the thermoplastic elastomer (B), and the tackifying resin (C) is preferably 20 mass% or more and 70 mass% or less, more preferably 25 mass% more and 60 mass% or less, even more preferably 30 mass% or more and 50 mass% by mass or less, and still even more preferably 38 mass% or more and 48 mass% or less.

### Tackifying Resin (C)

The adhesive composition of the present invention contains a tackifying resin (C) as an essential component. When the adhesive composition contains a tackifying resin (C), the tackiness of the surface after the adhesive composition is formed into a film can be maintained, and the adhesion between the substrate film and the adhesive layer can be further improved.

In the present invention, the content of the tackifying resin (C) is 100 to 600 parts by mass per 100 parts by mass of the acid-modified polyolefin (A). When the content of the tackifying resin (C) is less than 100 parts by mass per 100 parts by mass of the acid-modified polyolefin (A), the storage stability of the adhesive composition is significantly reduced. When the content of the tackifying resin (C) exceeds 600 parts by mass per 100 parts by mass of the acid-modified polyolefin (A), the storage stability of the adhesive composition significantly decreases, and the adhesive strength of the adhesive composition in the unstretched state and after stretching significantly decreases.

In one embodiment, the content of the tackifying resin (C) is preferably 150 parts by mass or more and 580 parts by mass or less, more preferably 200 parts by mass or more and 550 parts by mass or less, particularly preferably 250 parts by mass or more and 540 parts by mass or less, and most preferably 300 parts by mass or more and 530 parts by mass or less, per 100 parts by mass of the acid-modified polyolefin (A).

In one embodiment, the softening point of the tackifying resin (C) is preferably 60°C or more, more preferably 65°C or more, still more preferably 70°C or more, and most preferably 75°C or more. The softening point of the tackifying resin (C) is preferably 150°C or less, more preferably 145°C or less, still more preferably 140°C or less, and most preferably 130°C or less. When the softening point of the tackifying resin (C) is 60°C or more, the tackifying resin (C) is less likely to bleed out to the surface at room temperature, resulting in a smooth surface, and the adhesive composition exhibits better adhesion to a polyolefin substrate and to a substrate different from the polyolefin substrate. Furthermore, when the softening point of the tackifying resin (C) is 150°C or less, the adhesive composition exhibits better adhesion over a wide temperature range from low to high temperatures, and the adhesive strength of the adhesive composition after stretching is further improved.

In one embodiment, the tackifying resin (C) preferably has a softening point of 60°C or more and 150°C or less, more preferably 65°C or more and 145°C or less, still more preferably 70°C or more and 140°C or less, and most preferably 75°C or more and 130°C or less.

In one embodiment, the tackifying resin (C) is preferably at least one resin selected from the group consisting of rosin-based resins, terpene-based resins, and petroleum resins.

Examples of rosin-based resins include unmodified rosins such as gum rosin, tall oil rosin, and wood rosin; disproportionated rosin; polymerized rosin; hydrogenated rosin; maleic acid-modified rosin; and rosin esters. These rosin-based resins can be used singly or in a combination of two or more.

Examples of terpene-based resins include terpene resins such as α-pinene polymers, β-pinene polymers, and limonene polymers; aromatic modified terpene resins; and terpene phenol resins. These terpene-based resins can be used singly or in a combination of two or more.

Examples of petroleum resins include aliphatic petroleum resins, alicyclic petroleum resins, and aromatic petroleum resins. These petroleum resins can be used singly or in a combination of two or more.

In one embodiment, the tackifying resin (C) is preferably a rosin-based resin or a terpene-based resin, and more preferably a terpene-based resin. When the tackifying resin (C) is a rosin-based resin or a terpene-based resin, the adhesive composition exhibits better adhesion over a wide temperature range from low to high temperatures, exhibits improved adhesive strength after stretching, and the adhesion between a polyolefin substrate and a substrate different from the polyolefin substrate is further improved.

In one embodiment, the tackifying resin (C) is preferably at least one selected from the group consisting of unmodified rosin, disproportionated rosin, polymerized rosin, hydrogenated rosin, maleic acid-modified rosin, rosin ester, terpene resin, aromatic modified terpene resin, and terpene phenol resin.

In one embodiment, the tackifying resin (C) is particularly preferably a rosin ester and/or an aromatic modified terpene resin, and an aromatic modified terpene resin is most preferred.

In one embodiment, the content ratio of the tackifying resin (C) to the total mass of the acid-modified polyolefin (A), the thermoplastic elastomer (B), and the tackifying resin (C) is preferably 20 mass% or more and 70 mass% or less, more preferably 25 mass% or more and 60 mass% or less, even more preferably 30 mass% or more and 55 mass% or less, still even more preferably 35 mass% or more and 50 mass% or less, and particularly preferably 38 mass% or more and 48 mass% or less.

### Organic Solvent (D)

The adhesive composition of the present embodiment may contain an organic solvent (D). Examples of the organic solvent (D) include those capable of dissolving or dispersing, for example, the acid-modified polyolefin (A), the thermoplastic elastomer (B), and the tackifying resin (C). When the adhesive composition of the present embodiment contains the organic solvent (D), coatability is further improved.

Examples of the organic solvent (D) include aromatic hydrocarbon solvents such as benzene, toluene, and xylene; aliphatic hydrocarbon solvents such as hexane, heptane, octane, and decane; alicyclic hydrocarbon solvents such as cyclohexane, cyclohexene, methylcyclohexane, and ethylcyclohexane; halogenated hydrocarbon solvents such as trichloroethylene, dichloroethylene, chlorobenzene, and chloroform; alcohol solvents such as methanol, ethanol, isopropyl alcohol, butanol, pentanol, hexanol, propanediol, and phenol; ketone-based solvents such as acetone, methyl isobutyl ketone, methyl ethyl ketone, pentanone, hexanone, cyclohexanone, isophorone, and acetophenone; cellosolve solvents such as methyl cellosolve and ethyl cellosolve; ester-based solvents such as methyl acetate, ethyl acetate, butyl acetate, methyl propionate, and butyl formate; glycol ether solvents such as ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, and tetraethylene glycol mono-n-butyl ether. These can be used singly or in a combination of two or more.

In one embodiment, from the viewpoint of achieving higher solubility of the adhesive composition and imparting better storage stability to the adhesive composition, the organic solvent (D) preferably comprises a solvent (D1) and a solvent (D2), wherein the solvent (D1) is at least one solvent selected from the group consisting of aromatic hydrocarbon solvents, aliphatic hydrocarbon solvents, alicyclic hydrocarbon solvents, and halogenated hydrocarbon solvents, and the solvent (D2) is at least one solvent selected from the group consisting of alcohol-based solvents, ketone-based solvents, ester-based solvents, and glycol ether-based solvents.

In one embodiment, from the viewpoint of achieving even higher solubility of the adhesive composition and imparting even better storage stability to the adhesive composition, it is more preferable that
the organic solvent (D) is composed of a solvent (D1) and a solvent (D2),
the solvent (D1) is an alicyclic hydrocarbon solvent, and
the solvent (D2) is a ketone-based solvent and/or an ester-based solvent.

In one embodiment, from the viewpoint of achieving remarkably improved solubility of the adhesive composition and imparting excellent storage stability to the adhesive composition, it is even more preferable that
the organic solvent (D) is composed of a solvent (D1) and a solvent (D2),
the solvent (D1) is an alicyclic hydrocarbon solvent, and
the solvent (D2) is an ester-based solvent.

In one embodiment, when the organic solvent (D) is composed of a solvent (D1) and a solvent (D2), the mass ratio of the solvent (D1) to the solvent (D2) (solvent (D1)/solvent (D2)) is preferably solvent (D1)/solvent (D2) = 95/5 to 50/50, more preferably solvent (D1)/solvent (D2) = 90/10 to 55/45, even more preferably solvent (D1)/solvent (D2) = 85/15 to 60/40, and particularly preferably solvent (D1)/solvent (D2) = 80/20 to 65/35, from the viewpoint of achieving further improved solubility of the resin and imparting even higher storage stability to the adhesive composition.

In one embodiment, the content of the organic solvent (D) is preferably 100 parts by mass or more and 5000 parts by mass or less, more preferably 200 parts by mass or more and 4500 parts by mass or less, even more preferably 250 parts by mass or more and 4000 parts by mass or less, still even more preferably 300 parts by mass or more and 3500 parts by mass or less, and most preferably 400 parts by mass or more and 3000 parts by mass or less, per 100 parts by mass of the acid-modified polyolefin (A). When the content of the organic solvent (D) is 100 parts by mass or more and 5000 parts by mass or less per 100 parts by mass of the acid-modified polyolefin (A), the resulting adhesive composition has better storage stability and is advantageous in terms of economy (production cost and transportation cost).

### Adhesive Composition

The adhesive composition of the present embodiment may contain, in addition to the acid-modified polyolefin (A), thermoplastic elastomer (B), and tackifying resin (C), various additives such as plasticizers, curing agents, curing accelerators, curing catalysts, flame retardants, pigments, antiblocking agents, surfactants, antifoaming agents, anti-sagging agents, wetting agents, and ultraviolet absorbers, as long as the effects of the present invention are not impaired. These may be used singly or in a combination of two or more.

From the viewpoint of further improving the adhesion between a polyolefin substrate and a substrate of a type different from the polyolefin substrate, and further improving the storage stability of the adhesive composition, the adhesive composition of the present embodiment may contain an antioxidant.

In one embodiment, the antioxidant is preferably a phenolic antioxidant and/or a phosphorus-based antioxidant.

As the phenolic antioxidant, a wide range of known commercially available products can be used. Examples of such commercially available products include Songnox 1076 (produced by Songwon), Songnox 1010 (produced by Songwon), Songnox 1098 (produced by Songwon), and Songnox 2450 (produced by Songwon).

As the phosphorus-based antioxidant, a wide range of known commercially available products can be used. Examples of such commercially available products include Songnox 1680 (produced by Songwon).

The adhesive composition of the present embodiment exhibits sufficient adhesion over a wide range of temperatures, from low to high temperatures.

The adhesive composition of the present embodiment has good adhesive strength in the unstretched state and can maintain good adhesive strength even after stretching. Furthermore, the adhesive composition of the present embodiment exhibits good adhesion to polyolefin substrates and also to substrates of types different from polyolefin substrates.

When the adhesive composition of the present embodiment is formed to a thickness of 30 to 50 µm, the adhesive strength in the unstretched state is preferably 10 N/25 mm or more, more preferably 15 N/25 mm or more, and still more preferably 20 N/25 mm or more.

When the adhesive composition of the present embodiment is formed to a thickness of 30 to 50 µm, the adhesive strength after stretching the adhesive composition 1.25-fold in the longitudinal direction and 1.25-fold in the transverse direction is preferably 5 N/25 mm or more, more preferably 10 N/25 mm or more, and still more preferably 15 N/25 mm or more.

When the adhesive composition of the present embodiment is formed to a thickness of 30 to 50 µm, the adhesive strength after stretching the adhesive composition 2.0-fold in the longitudinal direction and 2.0-fold in the transverse direction is preferably 3 N/25 mm or more, more preferably 5 N/25 mm or more, and even more preferably 10 N/25 mm or more.

The upper limit of the adhesive strength after stretching in the present disclosure is not particularly limited, but 150 N/25 mm is sufficient for industrial purposes. The adhesive strength can be measured in accordance with the peel test method of ASTM-D1876-61. The specific measurement method is explained in the Examples described below.

In one embodiment, the lowest limit of the content ratio of the total of the acid-modified polyolefin (A), thermoplastic elastomer (B), and tackifying resin (C), based on the total mass of the adhesive composition, is preferably 5 mass% or more, 10 mass% or more, 15 mass% or more, or 20 mass% or more, in ascending order of preference, and the upper limit of the total content is preferably 55 mass% or less, 50 mass% or less, 45 mass% or less, or 40 mass% or less, in ascending order of preference. These upper and lower limits can be freely combined.

In another embodiment, the adhesive composition may consist only of the acid-modified polyolefin (A), the thermoplastic elastomer (B), and the tackifying resin (C) (provided, however, that unavoidable impurities can be contained).

In one embodiment, when the adhesive composition contains an organic solvent (D), the total content ratio of the acid-modified polyolefin (A), the thermoplastic elastomer (B), the tackifying resin (C), and the organic solvent (D) is preferably 80 mass% or more, 85 mass% or more, 90 mass% or more, or 95 mass% or more, in ascending order of preference, based on the total mass of the adhesive composition.

In another embodiment, the adhesive composition may consist only of an acid-modified polyolefin (A), a thermoplastic elastomer (B), a tackifying resin (C), and an organic solvent (D) (provided, however, that unavoidable impurities can be contained).

The adhesive composition of the present embodiment, which has a good adhesion to a polyolefin substrate and to a substrate of a type different from the polyolefin substrate, can find a wide variety of applications, such as sheets, films, and molded articles, and be suitably used in various fields such as automobiles, home appliances, electronic materials, foods, and medical care. The adhesive composition of the present embodiment can be particularly suitably used as an adhesive composition for decorative films.

The polyolefin substrate to be used de range of known polyolefins commonly used in this field. Examples of the polyolefin include polyethylene, polypropylene (PP), an ethylene-propylene copolymer, a propylene-1-butene copolymer, and an ethylene-propylene-1-butene copolymer. The adhesive composition of the present embodiment can be particularly suitably used for polypropylene substrates.

Examples of substrates of types different from polyolefin substrates include substrates of ABS resin, polycarbonate, polyvinyl chloride, acrylic resin, urethane resin, polyester resin, metals, or the like.

As the method for producing the adhesive composition of the present embodiment, a wide range of known methods can be used. For example, the following method can be used.
Step (1): an acid-modified polyolefin (A) having a melting point of 50 to 120°C, a thermoplastic elastomer (B) containing a styrene-based elastomer, and a tackifying resin (C) are added in any order into a stirrer in such a manner that the content of the tackifying resin (C) is 100 to 600 parts by mass per 100 parts by mass of the acid-modified polyolefin (A), and the content of the thermoplastic elastomer (B) is 100 to 600 parts by mass per 100 parts by mass of the acid-modified polyolefin (A), and these components are kneaded with heating.
Step (2): The resulting mixture is then cooled to room temperature to thereby produce an adhesive composition.

In the step (1), if necessary, the organic solvent (D), antioxidant, or additive may be added to the stirrer in any order.

In the step (1), the heating temperature during kneading is usually 50 to 200°C, preferably 60°C to 150°C, and more preferably 70°C to 120°C. The kneading time varies depending on, for example, the heating temperature, but is usually 10 minutes to 120 minutes, preferably 15 minutes to 90 minutes, and more preferably 20 minutes to 60 minutes.

### Decorative Film

The decorative film of the present embodiment has an adhesive layer of the present embodiment and a decorative layer. The decorative film of the present embodiment usually has an adhesive layer formed of the adhesive composition of the present embodiment and a decorative layer. The adhesive composition of the present embodiment can be suitably used when a decorative film is produced.

The decorative film according to the present embodiment is preferably configured to include:
(1A) an adhesive layer and a decorative layer in this order, the adhesive layer comprising the adhesive composition of the present embodiment; or
(2A) a decorative layer and an adhesive layer in this order, the adhesive layer comprising the adhesive composition of the present embodiment.

### Decorative Layer

Examples of the substrate for the decorative layer include ABS resin, polycarbonate, polyvinyl chloride, acrylic resin, urethane resin, and polyester resin. The thickness of the decorative layer is preferably 0.01 to 10 mm, more preferably 0.05 to 5 mm, and even more preferably 0.1 to 1 mm. The substrate of the decorative layer is usually a layer that determines the design of the decorative film.

### Adhesive Layer

The adhesive layer of the present embodiment contains the adhesive composition of the present embodiment. The adhesive layer of the present embodiment is usually formed using the adhesive composition of the present embodiment. The film thickness of the adhesive layer after drying is, when the adherend is a substrate film, preferably 0.5 µm to 50 µm, more preferably 1 µm to 40 µm, and still more preferably 10 µm to 30 µm. When the film thickness is in the range of 0.5 µm to 50 µm, the decorative film exhibits better adhesion over a wide range of temperatures, from low to high temperatures, and exhibits improved adhesive strength after stretching.

The film thickness of the adhesive layer after drying is preferably 5 µm to 80 µm, and more preferably 10 µm to 50 µm, when the adherend is a molded article. By having a film thickness within the range of 5 µm to 80 µm, the decorative film exhibits better adhesion over a wide range of temperatures, from low to high temperatures, and exhibits improved adhesive strength after stretching.

### Separator Layer

The decorative film according to another embodiment is preferably configured to include:
(1B) a separator layer, an adhesive layer, and a decorative layer in this order, the adhesive layer comprising the adhesive composition of the present embodiment; or
(2B) a decorative layer, an adhesive layer, and a separator layer in this order, the adhesive layer comprising the adhesive composition of the present embodiment.

The separator layer is usually used to temporarily protect the adhesive layer. Examples of the separator layer include synthetic resin substrate films and release-treated synthetic resin substrate films.

Examples of the substrate film that can be used for the separator layer include polyolefin resins such as polyethylene and polypropylene; and polyester resins such as polyethylene terephthalate (PET).

The separator layer is usually removed from the decorative film by being peeled off during the production process or at the time of use.

### Decorative Molded Article

The decorative molded article of the present embodiment includes an adherend and the decorative film of the present embodiment. The decorative molded article of the present embodiment is usually formed by bonding the decorative film of the present embodiment to an adherend. The decorative molded article of the present embodiment is usually formed by using the adhesive composition of the present embodiment. The decorative molded article of the present embodiment has the feature of having high adhesive strength in the unstretched state and having sufficient adhesive strength even after stretching.

### Method for Producing Decorative Film

As the method for producing the decorative film of the present embodiment, a wide range of known methods can be used. The decorative film can be used, for example, by applying the adhesive composition of the present embodiment to the surface of the decorative layer using an applicator, a bar coater, or the like, and then heating and drying to form an adhesive layer on the decorative layer.

When a decorative film is produced, it is preferable to bond a separator layer onto the adhesive layer (i.e., on the surface of the adhesive layer opposite the decorative layer side) using a hand roller or the like.

The decorative film of the present embodiment has excellent adhesive strength and can maintain its high adhesion strength even after stretching, and is therefore suitably used for decorating adherends by molding under vacuum conditions or reduced pressure conditions (the so-called vacuum forming method or pressure forming method).

Examples of adherends include substrate films and molded articles. Examples of substrate films include polyolefin resins such as polyethylene and polypropylene, and polyester resins such as polyethylene terephthalate (PET). Examples of molded articles include various home appliances such as household appliances, kitchen appliances, health appliances, and seasonal appliances; interior and exterior materials for residential facilities such as toilets, bathrooms, doors, and walls; automobile interior parts and automobile exterior parts such as bumpers, dashboards, doors, roofs, and hoods; various miscellaneous goods such as household goods and daily necessities; electronic components; nursing care and medical supplies; and interior and exterior parts for ships and aircraft.

The vacuum pressure forming method is a method of forming a decorative molded article by adsorbing a decorative film onto a molded article while applying pressure under vacuum conditions. This method can be performed, for example, by using a vacuum pressure forming apparatus. For example, the following vacuum pressure forming method can be used.

For example, an adherend and the decorative film of the present embodiment are set in a molding chamber under atmospheric pressure, and then the inside of the molding chamber is brought to a vacuum state. Subsequently, while the vacuum state is maintained in the molding chamber, the decorative film of the present embodiment is heated to a desired temperature using a heater to soften the decorative film of the present embodiment, and then stretched. After bringing the stretched decorative film into contact with a molded article as an adherend, the vacuum in the molding chamber is released to atmospheric pressure, and then compressed air is introduced into the molding chamber from a compressed air tank, thereby pressure-bonding the stretched decorative film onto the molded article along the shape of the molded article. Thereafter, the compressed air is released and the decorative molded article of the present embodiment is removed. When the decorative film has a separator layer, it is preferable to set the adherend and the decorative film having a separator layer in the molding chamber at atmospheric pressure, and then peel off the separator layer.

The present invention provides the inventions of the following aspects.

### Item 1.

An adhesive composition comprising an acid-modified polyolefin (A), a thermoplastic elastomer (B), and a tackifying resin (C), wherein the composition satisfies all of the following (1) to (4):
(1) the acid-modified polyolefin (A) has a melting point of 50 to 120°C;
(2) the content of the tackifying resin (C) is 100 to 600 parts by mass per 100 parts by mass of the acid-modified polyolefin (A) ;
(3) the content of the thermoplastic elastomer (B) is 100 to 600 parts by mass per 100 parts by mass of the acid-modified polyolefin (A); and
(4) the thermoplastic elastomer (B) comprises a styrene-based elastomer.

### Item 2.

The adhesive composition according to Item 1, wherein the acid-modified polyolefin (A) has an acid value of 2 to 50 mg KOH/g.

### Item 3.

The adhesive composition according to Item 1 or 2, wherein the acid-modified polyolefin (A) has a melt viscosity at 230°C of 1000 to 10000 mPa·s.

### Item 4.

The adhesive composition according to any one of Items 1 to 3, wherein the tackifying resin (C) is a rosin-based resin or a terpene-based resin.

### Item 5.

The adhesive composition according to any one of Items 1 to 4, wherein the melting point (Tm) of the acid-modified polyolefin (A) is preferably 55°C or higher and 110°C or lower, more preferably 60°C or higher and 100°C or lower, still more preferably 65°C or higher to 90°C or lower, and particularly preferably 70°C or higher to 85°C or lower.

### Item 6.

The adhesive composition according to any one of Items 1 to 5, wherein the acid value of the acid-modified polyolefin (A) is preferably 2 to 50 mg KOH/g, more preferably 3 to 40 mg KOH/g, still more preferably 4 to 30 mg KOH/g, even more preferably 5 to 25 mg KOH/g, and particularly preferably 6 to 16 mg KOH/g.

### Item 7.

The adhesive composition according to any one of Items 1 to 6, wherein the acid-modified polyolefin (A) preferably has a melt viscosity at 230°C of 1000 mPa·s or more and 10000 mPa·s or less, more preferably 1200 mPa·s or more and 8500 mPa·s or less, still more preferably 1300 mPa·s or more and 7500 mPa·s or less, particularly preferably 1400 mPa or more and 6000 mPa·s or less, most preferably 1500 mPa·s or more and 5000 mPa·s or less.

### Item 8.

The adhesive composition according to any one of Items 1 to 7, wherein the acid-modified polyolefin (A) is a graft polymer having a structure in which at least one selected from α,β-unsaturated carboxylic acid and acid anhydrides thereof is grafted onto a polyolefin.

### Item 9.

The adhesive composition according to any one of Items 1 to 8, wherein the acid-modified polyolefin (A) is preferably a graft polymer having a structure in which an acid anhydride of α,β-unsaturated carboxylic is grafted onto homopolypropylene or a propylene-α-olefin copolymer, and more preferably a graft polymer having a structure in which an acid anhydride of α,β-unsaturated carboxylic is grafted onto a propylene-α-olefin copolymer.

### Item 10.

The adhesive composition according to Item 9, wherein the propylene component content of the propylene-α-olefin copolymer is preferably 50 mol% or more, more preferably 60 mol% or more, even more preferably 65 mol% or more, and particularly preferably 70 mol% or more.

### Item 11.

The adhesive composition according to Item 9 or 10, wherein the propylene-α-olefin copolymer is preferably a propylene-ethylene copolymer and/or a propylene-1-butene copolymer, and more preferably a propylene-1-butene copolymer.

### Item 12.

The adhesive composition according to any one of Items 1 to 11, wherein the acid-modified polyolefin (A) is preferably at least one selected from the group consisting of maleic anhydride-modified polypropylene, maleic anhydride-modified propylene-ethylene copolymer, and maleic anhydride-modified propylene-1-butene copolymer, more preferably a maleic anhydride-modified propylene-ethylene copolymer and/or a maleic anhydride-modified propylene-1-butene copolymer, and even more preferably a maleic anhydride-modified propylene-1-butene copolymer.

### Item 13.

The adhesive composition according to any one of Items 1 to 12, wherein the content of the thermoplastic elastomer (B) is preferably more than 100 parts by mass and less than 600 parts by mass, more preferably 150 parts by mass or more and 550 parts by mass or less, even more preferably 200 parts by mass or more and 500 parts by mass or less, still even more preferably 250 parts by mass or more and 450 parts by mass or less, and most preferably 300 parts by mass or more and 430 parts by mass or less, per 100 parts by mass of the acid-modified polyolefin (A).

### Item 14.

The adhesive composition according to any one of Items 1 to 13, wherein the styrene content in the thermoplastic elastomer (B) is preferably 5 mass% or more and 35 mass% or less, more preferably 7 mass% or more and 30 mass% or less, still more preferably 9 mass% or more and 25 mass% or less, and most preferably 11 mass% or more and 15 mass% or less.

### Item 15.

The adhesive composition according to any one of Items 1 to 14, wherein the styrene-based elastomer is preferably at least one selected from the group consisting of styrene homopolymer, styrene-butadiene block copolymer, styrene-butadiene-styrene block copolymer, styrene-ethylene-propylene block copolymer, styrene-isoprene-butadiene-styrene block copolymer, styrene-isoprene-styrene block copolymer, styrene-ethylene-butylene-styrene block copolymer, and styrene-ethylene-propylene-styrene block copolymer, more preferably at least one selected from the group consisting of styrene-butadiene-styrene block copolymer, styrene-ethylene-propylene-styrene block copolymer, and styrene-isoprene-butadiene-styrene block copolymer, and particularly preferably styrene-butadiene-styrene block copolymer and/or styrene-ethylene-propylene-styrene block copolymer.

### Item 16.

The adhesive composition according to any one of Items 1 to 15, wherein the content of the tackifying resin (C) is preferably 150 mass% or more and 580 mass% or less, more preferably 200 mass% or more and 550 mass% or less, particularly preferably 250 mass% or more and 540 mass% or less, and most preferably 300 mass% or more and 530 mass% or less, per 100 mass% of the acid-modified polyolefin (A).

### Item 17.

The adhesive composition according to any one of Items 1 to 16, wherein the tackifying resin (C) is preferably a rosin-based resin or a terpene-based resin, and more preferably a terpene-based resin.

### Item 18.

The adhesive composition according to any one of Items 1 to 16, wherein the tackifying resin (C) is preferably at least one selected from the group consisting of unmodified rosin, disproportionated rosin, polymerized rosin, hydrogenated rosin, maleic acid-modified rosin, rosin ester, terpene resin, aromatic modified terpene resin, and terpene phenol resin, particularly preferably rosin ester and/or aromatic modified terpene resin, and most preferably aromatic modified terpene resin.

### Item 19.

The adhesive composition according to any one of Items 1 to 18, wherein the olefin-based elastomer content ratio to the total mass of the adhesive composition is preferably 10 mass% or less, more preferably 8 mass% or less, still more preferably 5 mass% or less, even more preferably 2.5 mass% or less, and particularly preferably 1 mass% or less.

### Item 20.

The adhesive composition according to Item 19, wherein the olefin-based elastomer is an ethylene-propylene copolymer, an ethylene-butene copolymer, an ethylene-vinyl acetate copolymer, or an ethylene-ethyl acrylate copolymer.

### Item 21.

The adhesive composition according to any one of Items 1 to 20, wherein the content ratio of the acid-modified polyolefin (A) to the total mass of the acid-modified polyolefin (A), the thermoplastic elastomer (B), and the tackifying resin (C) is preferably 5 mass% or more and 30 mass% or less, more preferably 8 mass% or more and 25 mass% or less, even more preferably 9 mass% or more and 20 mass% or less, and still more preferably 9.5 mass% or more and 17.5 mass% or less.

### Item 22.

The adhesive composition according to any one of Items 1 to 21, wherein the content ratio of the thermoplastic elastomer (B) to the total mass of the acid-modified polyolefin (A), the thermoplastic elastomer (B), and the tackifying resin (C) is preferably 20 mass% or more and 70 mass% or less, more preferably 25 mass% or more and 60 mass% or less, even more preferably 30 mass% or more and 50 mass% or less, and still more preferably 38 mass% or more and 48 mass% or less.

### Item 23.

The adhesive composition according to any one of Items 1 to 22, wherein the content ratio of the tackifying resin (C) to the total mass of the acid-modified polyolefin (A), the thermoplastic elastomer (B), and the tackifying resin (C) is preferably 20 mass% or more and 70 mass% or less, more preferably 25 mass% or more and 60 mass% or less, even more preferably 30 mass% or more and 55 mass% or less, still even more preferably 35 mass% or more and 50 mass% or less, and particularly preferably 38 mass% or more and 48 mass% or less.

### Item 24.

The adhesive composition according to any one of Items 1 to 23, wherein the total content ratio of the acid-modified polyolefin (A), the thermoplastic elastomer (B), and the tackifying resin (C) to the total mass of the adhesive composition is preferably 5 mass% or more and 55 mass% or less, more preferably 10 mass% or more and 50 mass% or less, even more preferably 15 mass% or more and 45 mass% or less, and still even more preferably 20 mass% or more and 40 mass% or less.

### Item 25.

The adhesive composition according to any one of Items 1 to 24, further comprising an organic solvent (D).

### Item 26.

The adhesive composition according to Item 25, wherein the content of the organic solvent (D) is preferably 100 mass% or more and 5000 mass% or less, more preferably 200 mass% or more and 4500 mass% or less, even more preferably 250 mass% or more and 4000 mass% or less, still even more preferably 300 mass% or more and 3500 mass% or less, and most preferably 400 mass% or more and 3000 mass% or less, per 100 mass% of the acid-modified polyolefin (A).

### Item 27.

The adhesive composition according to Item 25 or 26, wherein the organic solvent (D) preferably comprises a solvent (D1) and a solvent (D2), wherein the solvent (D1) is at least one solvent selected from the group consisting of aromatic hydrocarbon solvents, aliphatic hydrocarbon solvents, alicyclic hydrocarbon solvents, and halogenated hydrocarbon solvents, and
the solvent (D2) is at least one solvent selected from the group consisting of alcohol-based solvents, ketone-based solvents, ester-based solvents, and glycol ether-based solvents.

### Item 28.

The adhesive composition according to any one of Items 25 to 27, wherein more preferably,
the organic solvent (D) comprises the solvent (D1) and the solvent (D2),
the solvent (D1) is an alicyclic hydrogen solvent, and
the solvent (D2) is a ketone-based solvent and/or an ester-based solvent.

### Item 29.

The adhesive composition according to any one of Items 25 to 28, wherein even more preferably,
the organic solvent (D) comprises the solvent (D1) and the solvent (D2),
the solvent (D1) is an alicyclic hydrogen solvent, and
the solvent (D2) is an ester-based solvent.

### Item 30.

The adhesive composition according to any one of Items 27 to 29, wherein the mass ratio of the solvent (D1) to the solvent (D2) (solvent (D1)/solvent (D2)) is preferably solvent (D1)/solvent (D2) = 95/5 to 50/50, more preferably solvent (D1)/solvent (D2) = 90/10 to 55/45, even more preferably solvent (D1)/solvent (D2) = 85/15 to 60/40, and particularly preferably solvent (D1)/solvent (D2) = 80/20 to 65/35.

### Item 31.

The adhesive composition according to any one of Items 25 to 30, wherein the total content of the acid-modified polyolefin (A), the thermoplastic elastomer (B), the tackifying resin (C), and the organic solvent (D) preferably accounts for 80 mass% or more, more preferably 85 mass% or more, even more preferably 90 mass% or more, and still more preferably 95 mass% or more, of the total mass of the adhesive composition.

### Item 32.

The adhesive composition according to any one of Items 1 to 31, further comprising an antioxidant.

### Item 33.

The adhesive composition according to Item 32, wherein the antioxidant is a phenolic antioxidant and/or a phosphorus-based antioxidant.

### Item 34.

The adhesive composition according to any one of Items 1 to 33, for use in a decorative film.

### Item 35.

An adhesive layer comprising the adhesive composition of any one of Items 1 to 34.

### Item 36.

A decorative film comprising:
the adhesive layer of Item 35; and
a decorative layer.

### Item 37

A decorative molded article comprising:
the decorative film of Item 36; and
an adherend.

### Examples

The present invention is described below in more detail with reference to Examples. However, the present invention is not limited to these Examples. Below, "room temperature" refers to a temperature within the range of 20°C to 25°C.

### (1) Measurement of Acid Value of Acid-modified Polyolefin (A)

The acid value (mgKOH/g) of the acid-modified polyolefin (A) means the amount of potassium hydroxide (KOH) required to neutralize 1 g of the acid-modified polyolefin (A). The oxidation of the acid-modified polyolefin (A) was measured according to the test method of JIS K 0070 (1992). Specifically, 1 g of the acid-modified polyolefin (A) was dissolved in 100 g of xylene whose temperature was adjusted to 100°C, and then titrated at 100°C with a 0.1 mol/L solution of potassium hydroxide in ethanol (trade name: 0.1 mol/L Potassium Hydroxide Ethanolic Solution, produced by Wako Pure Chemical Industries, Ltd.) using phenolphthalein as an indicator. Here, the amount of KOH required for the titration was converted into milligrams, and the acid value (mgKOH/g) of the acid-modified polyolefin (A) was calculated.

### (2) Measurement of Weight Average Molecular Weight (Mw) of Acid-modified Polyolefin (A)

The weight average molecular weight (Mw) of the acid-modified polyolefin (A) was measured using an Alliance e2695 gel permeation chromatograph, produced by Nihon Waters K. K. The measurement conditions for gel permeation chromatography (GPC) were as follows. The calibration curve was obtained by preparing tetrahydrofuran solutions in which each of the polystyrene standards of "Molecular Weight Standard (fat-soluble polymer) MW 500" (Model 2012-2), "Molecular Weight Standard (fat-soluble polymer) MW 2,000" (Model 2012-5), "Molecular Weight Standard (fat-soluble polymer) MW 10,000" (Model 2012-9), "Molecular Weight Standard (fat-soluble polymer) MW 20,000" (Model 2013-1), "Molecular Weight Standard (fat-soluble polymer) MW 50,000" (Model 2013-3), and "Molecular Weight Standard (fat-soluble polymer) MW 200,000" (Model 2013-7), all produced by GL Sciences Inc., was dissolved at a concentration of 0.5%, filtering the solutions, placing them in vials, and measuring them.

### GPC Measurement Conditions

- Standard substance: Polystyrene resin (weight average molecular weight: 500, 2,000, 50,000, and 200,000)
- Concentration of the acid-modified polyolefin (A): 0.5 mass%
- Mobile phase: Tetrahydrofuran (THF)
- Column: Shodex KF-806 and KF-803
- Column temperature: 40°C
- Flow rate: 1.0 ml/min
- Detector: Photodiode array detector (UV detection at a wavelength of 254 nm)

### (3) Measurement of Melting Point (Tm) of Acid-modified Polyolefin (A)

The melting point (Tm) of the acid-modified polyolefin (A) was measured using a differential scanning calorimeter (DSC) (Q-2000 produced by TA Instruments Japan) in accordance with JIS K 7121-2012 as follows. 5.0 mg of the acid-modified polyolefin (A) was maintained at -50°C for 5 minutes and then heated from -50°C to 230°C at a rate of 10°C/min to melt the acid-modified polyolefin (A). Thereafter, the acid-modified polyolefin (A) was maintained at 230°C for 2 minutes, cooled from 230°C to -50°C at a rate of 10°C/min, maintained at -50°C for 2 minutes, and then heated from -50°C to 230°C at a rate of 10°C/min. The temperature (°C) at which the apex of the melting peak appeared upon melting was defined as the melting point (Tm) of the acid-modified polyolefin (A).

### (4) Measurement of Melt Viscosity of Acid-modified Polyolefin (A) at 230°C

A Brookfield viscometer (DV-1, manufactured by Brookfield) was used. 7.0 g of the acid-modified polyolefin (A) was charged into a heated cylinder set at 230°C. Ten minutes after charging, an SC4-21 spindle attached to the Brookfield viscometer was inserted into the molten resin in the cylinder, and rotation was started at 3 rpm. Ten minutes after the start of rotation, the rotation speed was adjusted as appropriate so that the torque value of the Brookfield viscometer fell within the range of 60 to 80%. After changing the rotation speed, the melt viscosity (mPa·s) was measured at 25 minutes, 30 minutes, 35 minutes, and 40 minutes thereafter, and the average value was taken as the melt viscosity (mPa·s) of the acid-modified polyolefin (A) at 230°C.

### Production Examples of Acid-modified Polyolefin (A)

### Production Example 1

100 parts by mass of a propylene-1-butene copolymer (Tm: 80°C; weight average molecular weight (Mw): 135,000; propylene component content: 75 mol%; 1-butene component content: 25 mol%), 150 parts by mass of toluene, 20 parts by mass of maleic anhydride, and 4 parts by mass of di-tert-butyl peroxide were added to a 1 L autoclave equipped with a stirrer. After purging with nitrogen for 5 minutes, the mixture was heated to 140°C with heating and stirring, and a reaction was allowed to proceed at 140°C for 1 hour. After completion of the reaction, the reaction mixture was cooled to 128°C and then poured into a container containing 250 parts by mass of methyl ethyl ketone. The mixture was stirred for 10 minutes while being kept warm in a warm water bath at 40°C to precipitate a resin, and then the slurry in which the resin had precipitated was cooled in a cold water bath until the internal temperature of the slurry reached 25°C. After cooling, the slurry was centrifuged to perform solid-liquid separation, thereby obtaining a wet resin. The obtained wet resin was further washed with methyl ethyl ketone several times to remove unreacted maleic anhydride. The obtained resin was dried under reduced pressure at 40°C for 6 hours to obtain a maleic anhydride-modified propylene-1-butene copolymer (A-1) (propylene component content: 75 mol%; 1-butene component content: 25 mol%; acid value: 22 mgKOH/g; weight average molecular weight (Mw): 50,000; Tm: 80°C; melt viscosity at 230°C: 1500 mPa·s), which is an acid-modified polyolefin (A).

### Production Example 2

100 parts by mass pf a propylene-1-butene copolymer (Tm: 80°C; weight average molecular weight (Mw): 135,000; propylene component content: 75 mol%; 1-butene component content: 25 mol%), 170 parts by mass of toluene, 8.5 parts by mass of maleic anhydride, and 4 parts by mass of di-tert-butyl peroxide were added to a 1 L autoclave equipped with a stirrer. After purging with nitrogen for 5 minutes, the mixture was heated to 140°C with heating and stirring, and a reaction was allowed to proceed at 140°C for 1 hour. After completion of the reaction, the reaction mixture was cooled to 128°C and then poured into a container containing 250 parts by mass of methyl ethyl ketone. The mixture was stirred for 10 minutes while being kept warm in a warm water bath at 40°C to precipitate a resin, and then the slurry in which the resin had precipitated was cooled in a cold water bath until the internal temperature of the slurry reached 25°C. After cooling, the slurry was centrifuged to perform solid-liquid separation, thereby obtaining a wet resin. The obtained wet resin was dried under reduced pressure at 40°C for 6 hours to obtain a maleic anhydride-modified propylene-1-butene copolymer (A-2) (propylene component content: 75 mol%; 1-butene component content: 25 mol%; acid value: 13 mgKOH/g; weight average molecular weight (Mw): 60,000; Tm: 80°C; melt viscosity at 230°C: 3000 mPa·s), which is an acid-modified polyolefin (A).

### Production Example 3

A maleic anhydride-modified propylene-1-butene copolymer (A-3) (propylene component content: 69 mol%; 1-butene component content: 31 mol%; acid value: 22 mgKOH/g; weight average molecular weight (Mw): 70,000; Tm: 70°C; melt viscosity at 230°C: 1500 mPa-s), which is an acid-modified polyolefin (A), was obtained in the same manner as in Production Example 1, except that a propylene-1-butene copolymer (Tm: 70°C; weight average molecular weight (Mw): 135,000; propylene component content: 69 mol%; 1-butene component content: 31 mol%) was used in place of the propylene-1-butene copolymer used in Production Example 1.

### Production Example 4

A maleic anhydride-modified propylene-ethylene-1-butene copolymer (A-4) (propylene component content: 94 mol%; ethylene component content: 3 mol%; 1-butene component content: 3 mol%; acid value: 19 mgKOH/g; weight average molecular weight (Mw): 70,000; Tm: 130°C; melt viscosity at 230°C: 3000 mPa·s), which is an acid-modified polyolefin (A), was obtained in the same manner as in Production Example 1, except that a propylene-ethylene-1-butene copolymer (Tm: 130°C; weight average molecular weight (Mw): 70,000; propylene component content: 94 mol%; ethylene component content: 3 mol%; 1-butene component content: 3 mol%) was used in place of the propylene-1-butene copolymer used in Production Example 1.

### Production Example 5

A maleic anhydride-modified propylene-ethylene copolymer (A-5) (propylene component content: 85 mol%; ethylene component content: 15 mol%; acid value: 22 mgKOH/g; weight average molecular weight (Mw): 90,000; Tm: 63°C; melt viscosity at 230°C: 8000 mPa·s), which is an acid-modified polyolefin (A), was obtained in the same manner as in Production Example 1, except that a propylene-ethylene copolymer (Tm: 63°C; weight average molecular weight (Mw): 135,000; propylene component content: 85 mol%; ethylene component content: 15 mol%) was used in place of the propylene-1-butene copolymer used in Production Example 1.

### Production Example 6

A maleic anhydride-modified propylene-ethylene copolymer (A-6) (propylene component content: 95 mol%; ethylene component content: 5 mol%; acid value: 22 mgKOH/g; weight average molecular weight (Mw): 60,000; Tm: 115°C; melt viscosity at 230°C: 3300 mPa·s), which is an acid-modified polyolefin (A), was obtained in the same manner as in Production Example 1, except that a propylene-ethylene copolymer (Tm: 122°C; weight average molecular weight (Mw): 135,000; propylene component content: 95 mol%; ethylene component content: 5 mol%) was used in place of the propylene-1-butene copolymer used in Production Example 1.

The thermoplastic elastomers (B) used in the Examples and Comparative Examples are as follows:
Thermoplastic elastomer (B-1): Septon (registered trademark) 2063 produced by Kuraray Co., Ltd. (styrene-ethylene-propylene-styrene-based elastomer, styrene content: 13 mass%);
Thermoplastic elastomer (B-2): Septon (registered trademark) 2006 produced by Kuraray Co., Ltd. (styrene-ethylene-propylene-styrene-based elastomer, styrene content: 34 mass%);
Thermoplastic elastomer (B-3): Tufprene (registered trademark) A produced by Asahi Kasei Corporation (styrene-butadiene-styrene-based elastomer, styrene content: 40 mass%); and
Thermoplastic elastomer (B-4): Vistamaxx (registered trademark) 3000 produced by Exxon Mobil Corporation (ethylene/propylene-based elastomer, styrene content: 0 mass%).

The tackifying resins (C) used in the Examples and Comparative Examples are as follows:
Tackifying resin (C-1): YS Resin (registered trademark) TO-85 produced by Yasuhara Chemical Co., Ltd. (aromatic modified terpene resin, softening point: 85°C);
Tackifying resin (C-2): Pinecrystal (registered trademark) KE-100 produced by Arakawa Chemical Industries, Ltd. (rosin ester resin,
softening point: 100°C); and
Tackifying resin (C-3): YS Resin (registered trademark) TO-125 produced by Yasuhara Chemical Co., Ltd. (aromatic modified terpene resin, softening point: 125°C).

The antioxidants used in the Examples and Comparative Examples are as follows:
Antioxidant 1: Songnox 1010 produced by Songwon (phenolic antioxidant); and
Antioxidant 2: Songnox 1680 produced by Songwon (phosphorus-based antioxidant).

### Examples 1 to 14, 16, and 17, and Comparative Examples 1 to 10 Production of Adhesive Composition 1

100 parts by mass of the maleic anhydride-modified propylene-1-butene copolymer (A-1) obtained in Production Example 1, 400 parts by mass of the thermoplastic elastomer (B-1), 500 parts by mass of the tackifying resin (C-1), and 2400 parts by mass of cyclohexane (D1) and 600 parts by mass of butyl acetate (D2) as the organic solvent (D) were placed in a 500 mL four-necked flask equipped with a water-cooled reflux condenser and a stirrer, and the mixture was heated to 70°C with stirring and stirred at 70°C for 1 hour. Thereafter, the mixture was cooled to room temperature to obtain adhesive composition 1.

### Preparation of Adhesive Compositions 2 to 14 and 16 to 27

Adhesive compositions 2 to 11, 14, and 16 to 27 were produced in the same manner as in Example 1, except that the types and amounts of the acid-modified polyolefin (A), thermoplastic elastomer (B), and tackifying resin (C) were changed as shown in Table 1. Adhesive compositions 12 and 13 were produced in the same manner as in Example 1, except that the types and amounts of the acid-modified polyolefin (A), thermoplastic elastomer (B), tackifying resin (C), and antioxidant were changed as shown in Table 1. In preparing the adhesive compositions 2 to 14 and 16 to 27, 2400 parts by mass of cyclohexane (D1) and 600 parts by mass of butyl acetate (D2) were used as the organic solvent (D), as in Example 1.

### Preparation of Decorative Molded Article

A urethane resin film (Higress (registered trademark) DUS-202 produced by Sheedom Co., Ltd., thickness: 100 mm) was used as a substrate for a decorative layer. Each of the produced adhesive compositions 1 to 14 and 16 to 27 was applied to its respective urethane resin film with an applicator to give a film thickness after drying of 40 µm. Drying was performed at an environment of 80°C for 15 minutes using a hot air dryer to obtain a decorative film (adhesive layer/urethane resin film) in which an adhesive layer (film thickness: 40 µm) was formed on the urethane resin film. A polypropylene (PP) test plate (produced by Nippon Testpanel Co., Ltd., thickness: 2 mm) was placed as an adherend on the adhesive layer of the obtained decorative film (the surface of the adhesive layer on the side opposite to the urethane resin film side) and bonded together using a heat seal tester (TP-701-B produced by Tester Sangyo Co., Ltd.) at a temperature of 100°C and 0.2 MPa for 30 seconds. After bonding, the resulting product was cured at room temperature for 1 day to prepare a decorative molded article (PP test plate/decorative film). The prepared decorative molded article (unstretched decorative molded article) was used as a sample for measuring adhesive strength in the unstretched state.

### Preparation of Decorative Molded Article by Vacuum Pressure Forming Method

A urethane resin film (Higress (registered trademark) DUS-202 produced by Sheedom Co., Ltd., thickness: 100 mm) was used as a substrate for a decorative layer. Each of the produced adhesive compositions 1 to 14 and 16 to 27 was applied to a urethane resin film using an applicator so as to give a film thickness after drying of 40 µm, followed by drying at 80°C for 15 minutes using a hot-air dryer to obtain a decorative film (adhesive layer/urethane resin film) in which an adhesive layer (film thickness: 40 µm) was formed on the urethane resin film. The obtained decorative film (adhesive layer/urethane resin film) was placed in a mold for stretching, and a polypropylene (PP) test plate (produced by Nippon Testpanel Co., Ltd., thickness: 2 mm) was used as an adherend. The mold and the PP test plate were each set in an "NGF-T-0203" TOM forming machine (produced by Fuse Vacuum Forming Co., Ltd.). The decorative film (adhesive layer/urethane resin film) in the mold was heated to 100°C and stretched 1.25 times in the longitudinal direction and 1.25 times in the transverse direction or 2.0 times in the longitudinal direction and 2.0 times in the transverse direction, and the stretched decorative film was bonded to the PP test plate by maintaining at 50°C for 35 seconds. Thereafter, the resulting product was cured at room temperature for 1 day (24 hours) to prepare a stretched decorative molded article (PP test plate/stretched decorative film). The two types of stretched decorative molded articles prepared (PP test plate/decorative film stretched 1.25 times in the longitudinal direction and 1.25 times in the transverse direction, and PP test plate/decorative film stretched 2.0 times in the longitudinal direction and 2.0 times in the transverse direction) were used as samples for measuring adhesive strength after stretching.

### Example 15

### Production of Adhesive Composition 15

Adhesive composition 15 was produced in the same manner as in Example 1, except that the types and amounts of the acid-modified polyolefin (A), thermoplastic elastomer (B), and tackifying resin (C) were changed as shown in Table 1.

### Preparation of Decorative Molded Article

A urethane resin film (Higress (registered trademark) DUS-202 produced by Sheedom Co., Ltd., thickness: 100 mm) was used as a substrate for a decorative layer. The produced adhesive composition 15 was applied to the urethane resin film with an applicator to give a film thickness after drying of 40 µm. Drying was performed at an atmosphere of 80°C for 15 minutes using a hot air dryer to obtain a decorative film (adhesive layer/urethane resin film) in which an adhesive layer (film thickness: 40 µm) was formed on the urethane resin film. A polypropylene (PP) test plate (produced by Nippon Testpanel Co., Ltd., thickness: 2 mm) was placed as an adherend on the adhesive layer of the obtained decorative film (the surface of the adhesive layer on the side opposite to the urethane resin film side) and bonded together using a heat seal tester (TP-701-B produced by Tester Sangyo Co., Ltd.) at a temperature of 100°C and 0.2 MPa for 30 seconds. After bonding, the resulting product was cured at room temperature for 1 day to prepare a decorative molded article (PP test plate/decorative film). The prepared decorative molded article (unstretched decorative molded article) was used as a sample for measuring adhesive strength in the unstretched state.

### Preparation of Decorative Molded Article by Vacuum Pressure Forming Method

A urethane resin film (Higress (registered trademark) DUS-202 produced by Sheedom Co., Ltd., thickness: 100 mm) was used as a substrate for a decorative layer. Each of the produced adhesive compositions 1 to 14 and 16 to 27 was applied to a urethane resin film using an applicator so as to give a film thickness after drying of 40 µm, followed by drying at 80°C for 15 minutes using a hot-air dryer to obtain a decorative film (adhesive layer/urethane resin film) in which an adhesive layer (film thickness: 40 µm) was formed on the urethane resin film. The obtained decorative film (adhesive layer/urethane resin film) was placed in a mold for stretching, and a polypropylene (PP) test plate (produced by Nippon Testpanel Co., Ltd., thickness: 2 mm) was used as an adherend. The mold and the PP test plate were each set in an "NGF-T-0203" TOM forming machine (produced by Fuse Vacuum Forming Co., Ltd.). The decorative film (adhesive layer/urethane resin film) in the mold was heated to 120°C and stretched 1.25 times in the longitudinal direction and 1.25 times in the transverse direction or 2.0 times in the longitudinal direction and 2.0 times in the transverse direction, and the stretched decorative film was bonded to the PP test plate by maintaining at 50°C for 35 seconds. Thereafter, the resulting product was cured at room temperature for 1 day (24 hours) to prepare a stretched decorative molded article (PP test plate/stretched decorative film). The two types of stretched decorative molded articles prepared (PP test plate/decorative film stretched 1.25 times in the longitudinal direction and 1.25 times in the transverse direction, and PP test plate/decorative film stretched 2.0 times in the longitudinal direction and 2.0 times in the transverse direction) were used as samples for measuring adhesive strength after stretching.

### (1) Measurement of Adhesive Strength

The three types of decorative molded articles (unstretched decorative molded article and two types of stretched decorative molded articles) prepared in each of Examples 1 to 17 and Comparative Examples 1 to 10 were each cut into 25 mm strips to prepare test pieces of the three types of decorative molded articles. The test pieces of the three types of decorative molded articles prepared were subjected to a 180° peel test to measure the adhesive strength of the unstretched decorative molded article (adhesive strength in the unstretched state) (N/25 mm), the adhesive strength of the stretched decorative molded article (PP test plate/decorative film stretched 1.25-fold in the longitudinal direction and 1.25-fold in the transverse direction) (adhesive strength after stretching 1.25-fold in the longitudinal direction and 1.25-fold in the transverse direction) (N/25 mm), and the adhesive strength of the stretched decorative molded article (PP test plate/decorative film stretched 2.0-fold in the longitudinal direction and 2.0-fold in the transverse direction) (adhesive strength after stretching 2.0-fold in the longitudinal direction and 2.0-fold in the transverse direction) (N/25 mm). The 180° peel test was conducted in accordance with the test method of ASTM-D1876-61 using a tensile tester (Tensilon RTM-100 produced by Orientec Corporation) by pulling vertically in an environment of 25°C at a distance between chucks of 40 mm and a tensile speed of 50 mm/min to measure the adhesive strength (N/25 mm). The measurement was performed twice, and the average value was defined as the adhesive strength (N/25 mm) of the test piece of each of the three types of decorative molded articles.

### (2) Evaluation of Storage Stability

The viscosity of each of the adhesive compositions 1 to 27 immediately after production was measured using a Brookfield viscometer (TVB-10M produced by Toki Sangyo Co., Ltd.). After measurement, the adhesive compositions 1 to 27 were individually placed in separate glass bottles, sealed, and allowed to stand at 25°C for 1 week (for 168 hours after production). The appearance of each of the adhesive compositions 1 to 27 after standing for 1 week was visually observed. In addition, the viscosity of each of the adhesive compositions 1 to 27 after standing for 1 week was measured using a Brookfield viscometer (TVB-10M produced by Toki Sangyo Co., Ltd.). The results of visual observation and the increase in viscosity (%) represented by the following formula (1) were evaluated according to the following evaluation criteria. A rating of "A" or "B" indicates that there is no problem in practical use. 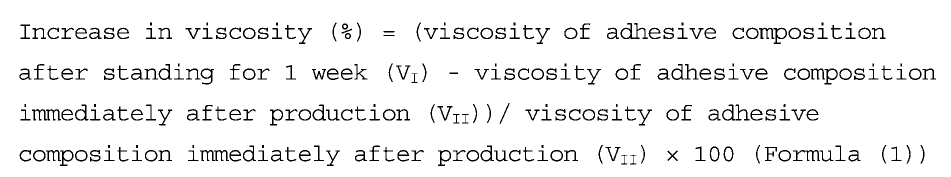 Increase in viscosity (%) = (viscosity of adhesive composition after standing for 1 week (VI) - viscosity of adhesive composition immediately after production (VII))/ viscosity of adhesive composition immediately after production (VII) × 100 (Formula (1))

### Evaluation criteria

A: No aggregates or gelation was observed, and the increase in viscosity was less than 5%.
B: No aggregates or gelation was observed, and the increase in viscosity was 5% or more and less than 30%.
C: Aggregates or gelation was observed, or the increase in viscosity was 30% or more.

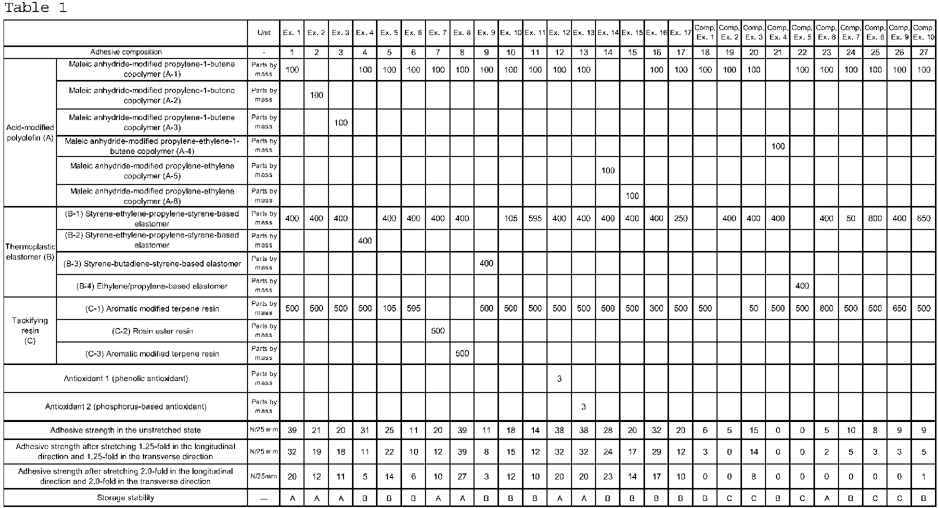

### Discussion of Results in Table 1

As shown in Table 1, it was confirmed that the decorative molded articles formed from the adhesive compositions 1 to 17 all had good adhesive strength in the unstretched state. In addition, the decorative molded articles formed from the adhesive compositions 1 to 17 maintained good adhesive strength even after being stretched 1.25-fold in the longitudinal direction and 1.25-fold in the transverse direction, and even after being stretched 2.0-fold in the longitudinal direction and 2.0-fold in the transverse direction. Furthermore, it was confirmed that the adhesive compositions 4 to 6, 9 to 11, and 14 to 17 exhibited good storage stability and that the adhesive compositions 1 to 3, 7, 8, 12, and 13 exhibited excellent storage stability.

In contrast, the adhesive composition 18, which was obtained in Comparative Example 1, was significantly poor in adhesive strength since it did not contain a thermoplastic elastomer. The adhesive composition 19, which was obtained in Comparative Example 2, was significantly poor in both adhesive strength and storage stability since it did not contain a tackifying resin. The adhesive composition 20, which was obtained in Comparative Example 3, was significantly poor in storage stability since the content of the tackifying resin was less than 100 parts by mass per 100 parts by mass of the acid-modified polyolefin. The adhesive composition 21, which was obtained in Comparative Example 4, was extremely poor in adhesive strength since the melting point (130°C) of the acid-modified polyolefin exceeded 120°C. The adhesive composition 22, which was obtained in Comparative Example 5, was extremely poor in both adhesive strength and storage stability since the thermoplastic elastomer did not comprise a styrene-based elastomer. The adhesive compositions 23 and 26, which were obtained in Comparative Example 6 and Comparative Example 9, were significantly poor in adhesive strength since the content of the tackifying resin exceeded 600 parts by mass per 100 parts by mass of the acid-modified polyolefin. The adhesive composition 24, which was obtained in Comparative Example 7, was extremely poor in adhesive strength after stretching 2.0-fold in the longitudinal direction and 2.0-fold in the transverse direction since the content of the thermoplastic elastomer was less than 100 parts by mass per 100 parts by mass of the acid-modified polyolefin. The adhesive compositions 25 and 27, which were obtained in Comparative Example 8 and Comparative Example 10, were significantly poor in both adhesive strength after stretching 1.25-fold in the longitudinal direction and 1.25-fold in the transverse direction and adhesive strength after stretching 2.0-fold in the longitudinal direction and 2.0-fold in the transverse direction since the content of the thermoplastic elastomer exceeded 600 parts by mass per 100 parts by mass of the acid-modified polyolefin.

### Industrial Applicability

The adhesive composition of the present embodiment exhibits excellent adhesion not only to non-polar substrates, such as polyolefin substrates, but also to substrates different in type from polyolefin substrates, such as polar substrates and metals. In addition, the resin composition of the present embodiment has good storage stability, exhibits good adhesive strength in the unstretched state, and maintains good adhesive strength even after stretching. Thus, the decorative film formed from the adhesive composition of the present embodiment is suitably used in the vacuum pressure forming method. Furthermore, the adhesive composition of the present embodiment can be widely used as an adhesive for a variety of applications, such as bonding various substrates together.

## Claims

1. An adhesive composition comprising:
an acid-modified polyolefin (A);
a thermoplastic elastomer (B); and
a tackifying resin (C),
wherein the composition satisfies all of the following (1) to (4) :
(1) the acid-modified polyolefin (A) has a melting point of 50 to 120°C;
(2) the content of the tackifying resin (C) is 100 to 600 parts by mass per 100 parts by mass of the acid-modified polyolefin (A);
(3) the content of the thermoplastic elastomer (B) is 100 to 600 parts by mass per 100 parts by mass of the acid-modified polyolefin (A); and
(4) the thermoplastic elastomer (B) comprises a styrene-based elastomer.

2. The adhesive composition according to claim 1, wherein the acid-modified polyolefin (A) has an acid value of 2 to 50 mg KOH/g.

3. The adhesive composition according to claim 1, wherein the acid-modified polyolefin (A) has a melt viscosity at 230°C of 1000 to 10000 mPa·s.

4. The adhesive composition according to claim 1, wherein the tackifying resin (C) is a rosin-based resin or a terpene-based resin.

5. The adhesive composition according to any one of claims 1 to 4, for use in a decorative film.

6. An adhesive layer comprising the adhesive composition of any one of claims 1 to 4.

7. A decorative film comprising:
the adhesive layer of claim 6; and
a decorative layer.

8. A decorative molded article comprising:
the decorative film of claim 7; and
an adherend.
